# EUROPEAN PATENT APPLICATION

(11) **EP 3 680 046 A1**
(43) Date of publication of application: **15.07.2020**
(21) Application number: 17924329.0
(22) Date of filing: 07.09.2017
(51) Int. Cl.: B23B 35/00, B23B 41/00, B23B 51/02

(54) **DEEP HOLE MACHINING METHOD**

(71) Applicant: OSG Corporation, Aichi 442-0005 (JP)
(72) Inventor: YAMAMOTO, Takahiro, Toyokawa-shi Aichi 441-1231 (JP)
(74) Representative: Epping - Hermann - Fischer
(86) International application number: PCT/JP2017/032268
(87) International publication number: WO 2019/049258

(57) **Abstract**

A drill is a long drill that is provided with a discharge groove having a helix angle of 25 degrees, in which a groove length is 30D or more. Thinning processing is performed on a leading end portion of the drill and a gash portion that is connected to the discharge groove further to an inner side in the radial direction than an outer peripheral surface. A circular arc groove is formed in a section connecting a thinning face and a gash face, and a chip discharge performance is improved. When forming a deep hole, in a guide hole forming process, a guide hole with an inner diameter d of D + 0.03 mm or less and with a depth W of 3D or more, is formed (S2 to S6). In an insertion process, the drill is rotated in a reverse direction and is inserted into the guide hole to a position just before a bottom portion of the guide hole (S11 to S13). In a deep hole forming process, the drill is rotated in a positive direction, cutting is performed from the bottom portion of the guide hole, and a deep hole is formed (S16 to S18).

## Description

### Technical Field

The present invention relates to a deep hole machining method.

### Background art

In related art, when a deep hole is formed in a workpiece, a guide hole that has a diameter slightly larger than the deep hole and that is shallow is formed before forming the deep hole. A drill mounted on a main shaft of a machine tool is inserted into the guide hole in a state in which the drill rotates at low speed in a rotation direction when grinding. When a leading end portion of the drill is inserted as far as just before a bottom portion of the guide hole, the drill rotates at a speed when cutting and the deep hole is formed by performing the cutting in that state.

In particular, when forming a deep hole of 30D or greater, since chips are more likely to cause clogging during machining the deeper the hole, rather than a twist drill having a helical chip discharge groove formed in an outer peripheral surface thereof, a gun drill in which a discharge groove is formed in a straight line is used (refer to Patent Literature 1, for example). In Patent Literature 1, by optimizing a supply of coolant in accordance with a stage of machining, a chip discharge performance is secured.

### Citation List

### Patent Literature

Patent Literature 1: Japanese Patent No. 4990650

### Summary of Invention

### Problems that invention is to solve

However, it has not been possible to improve machining efficiency of a gun drill, and, since a tool life is also short, there has been demand to use a twist drill.

An object of the present invention is to provide a deep hole machining method capable of suppressing damage of a drill main body at a time of machining, while forming a deep hole using a drill capable of improving rigidity and a chip discharge performance.

According to a first aspect of the present invention, a deep hole machining method is a deep hole machining method for forming a deep hole in a workpiece using a machine tool on which a drill is mounted. The drill includes: a drill main body configured to be rotated around a shaft center; a plurality of discharge grooves provided in a helical shape in an outer peripheral surface of the drill main body, from a leading end portion toward a base end portion of the drill main body, each having a helix angle of 15 degrees or more and 35 degrees or less; a cutting edge formed on a ridge section between an inner face of the discharge groove that is oriented toward a rotation direction side of the drill main body, and a flank of the drill main body at the leading end portion of the drill main body; a thinning edge provided as a result of thinning processing performed on the leading end portion of the drill main body, and extending from an inner end of the cutting edge toward a chisel portion that is the leading end portion of the drill main body; and a gash portion provided by the thinning processing, a ridge between the gash portion and the flank extending in a circular arc shape from an inner end of the thinning edge, and the gash portion being connected to the discharge groove further to an inner peripheral side than the outer peripheral surface of the drill main body. Machining of the workpiece by the machine tool using the drill includes: a guide hole forming process in which another drill is used to form, in advance, a guide hole in the workpiece into which the leading end portion of the drill main body can be inserted, the guide hole having an inner diameter d that is larger than an outer diameter D of the drill main body and having a depth that is W; an insertion process in which the leading end portion of the drill main body is inserted to a position just before a bottom portion of the guide hole, while the drill main body is rotating in a reverse direction that is opposite to a rotation direction at a time of cutting, at a lower speed than that at a time of machining; and a deep hole forming process in which the guide hole is further cut and the deep hole is formed, while the drill main body is rotating in a positive direction that is the rotation direction at the time of cutting.

The drill is a twist drill in which a helix angle of each of the discharge grooves is 15 degrees or more and 35 degrees or less, and a chip discharge performance is higher, machining efficiency is higher, and tool life is also longer than a gun drill, for example. When forming the deep hole using this type of drill, when centrifugal force acts on deformation of the drill main body due to its own weight, centrifugal whirling of the drill sometimes occurs. In the insertion process, by rotating the drill main body at a lower speed than at the time of machining, the centrifugal whirling of the drill can be suppressed. The leading end portion of the drill in which the centrifugal whirling has been suppressed is easily inserted into the guide hole that has been formed in advance. As a result of the leading end portion of the drill being inserted into the guide hole, the drill rotates in a state in which both ends thereof are supported by the guide hole and the machine tool, and thus, deformation of the drill main body can be corrected. Further, the drill main body rotates in the reverse direction, and thus the drill main body is inserted into the guide hole while being aligned with the guide hole from the side of a heel of the drill on which the cutting edge is not formed. Thus, the leading end portion of the drill is inhibited from coming into contact with peripheral edge sections of the guide hole, or from touching the inner wall of the guide hole, and progression of damage, or defects/breakage of the drill main body can be prevented. Furthermore, since the drill rotates in the reverse direction in the insertion process, it is possible to prevent a tool edge from biting into the workpiece when the cutting edge of the drill main body touches the peripheral edge sections or the inner wall of the guide hole, and thus, damage of the cutting edge can be suppressed. In addition, the drill has the gash portion that does not reach the outer peripheral surface of the drill main body, and that connects with the discharge groove further to the inner peripheral side than the outer peripheral surface. As a result, the chips curl more easily and are more easily cut, and thus, the drill can improve a chip discharge performance. Therefore, when forming the deep hole, the drill main body can be prevented from breaking.

With respect to the present aspect, a groove length L of the discharge groove may be 30D or more. An influence of deformation of the drill main body due to its own weight is more likely to occur the longer the groove length L, namely, the longer the drill main body. By machining the workpiece in accordance with the deep hole machining method of the configuration of the present application, using the drill having the groove length L of 30D or greater, the effect of preventing the breakage of the drill main body in the insertion process can be even more clearly demonstrated.

With respect to the present aspect, the inner diameter d of the guide hole may be D + 0.03 mm or less, and the depth W may be 3D or more. When the inner diameter d is larger than D + 0.03 mm, in the deep hole forming process, the stability when the cutting edge and the thinning edge bite into the workpiece deteriorates. When the depth W is less than 3D, in comparison to a case in which the depth W is 3D or more, a displacement between an opening position on a start end side of the deep hole in the workpiece and an opening position on a finishing end side is larger, and a forming accuracy of the deep hole decreases.

With respect to the present aspect, the drill may include a circular arc groove having a circular arc shaped cross section that is provided in a section connecting a thinning face, which is a rake face of the thinning edge and which connects the thinning edge and the discharge groove, with a gash face of the gash portion, and the helix angle of the discharge groove may be 25 degrees. The drill in which the helix angle of each of the discharge grooves is 25 degrees has higher rigidity than a general drill in which the helix angle is 30 degrees, but the chip discharge performance deteriorates. In this drill, since the circular arc groove is provided, a chip pocket in the gash portion can be widened, and the chip discharge performance can be improved. By machining the workpiece in accordance with the deep hole machining method of the configuration of the present application using this type of drill, the effect of preventing the breakage of the drill main body in the deep hole forming process can be even more clearly demonstrated.

### Brief description of the drawings

Fig. 1 is a side view of a drill 1.
Fig. 2 is a front view of a leading end portion of the drill 1.
Fig. 3 is a side view of a drill 101.
Fig. 4 is a front view of a leading end portion of the drill 101.
Fig. 5 is a schematic configuration diagram of a machine tool 200.
Fig. 6 is a flowchart of an NC program for deep hole machining.
Fig. 7 is a graph showing vibrations when forming deep holes using a drill with a helix angle of 20 degrees.
Fig. 8 is a graph showing vibrations when forming deep holes using a drill with a helix angle of 25 degrees.
Fig. 9 is a graph showing vibrations when forming deep holes using a drill with a helix angle of 30 degrees.
Fig. 10 is a graph showing vibrations when forming deep holes using a drill with a helix angle of 35 degrees.
Fig. 11 is a table showing diameter differences between an inner diameter d of a guide hole and an outer diameter D of the drill, and biting states.
Fig. 12 is a graph showing a relationship between a size of a guide hole and positional displacement of openings of a through hole.
Fig. 13 is a diagram in which a leading end portion of the drill that has rotated in a positive direction in an insertion process is photographed after forming 22 holes.
Fig. 14 is a diagram in which the leading end portion of the drill that has rotated in a reverse direction in the insertion process is photographed after forming 60 holes.

### Modes for Carrying Out the Invention

Hereinafter, drills 1 and 101 used to form deep holes by a deep hole machining method according to the present invention will be explained with reference to the drawings. The drill 1 is an example of a double-edged drill on which two cutting edges 5 are formed at a leading end portion thereof. The drill 101 is an example of a triple-edged drill on which three cutting edges 105 are formed at a leading end portion thereof.

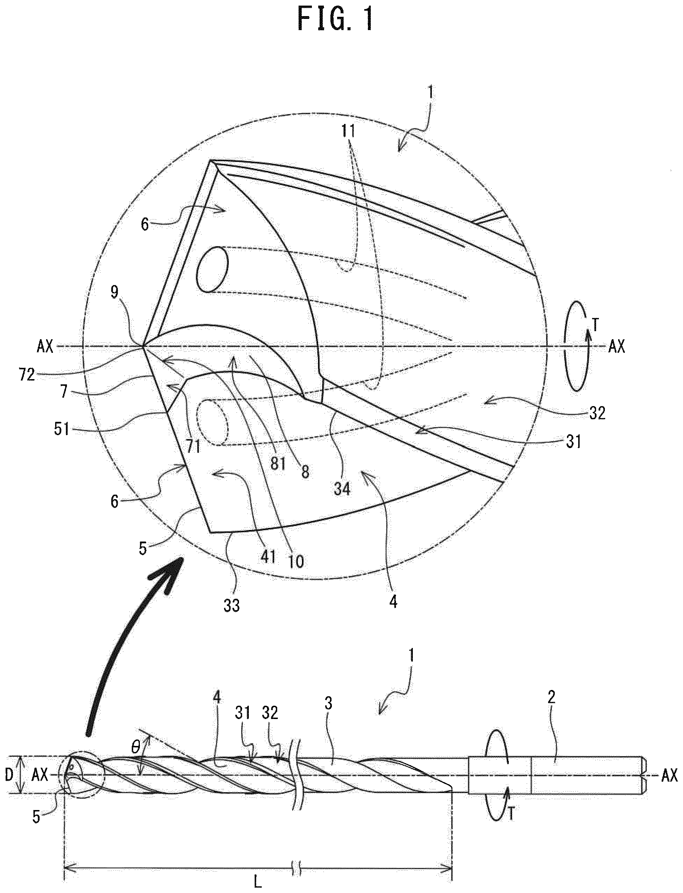

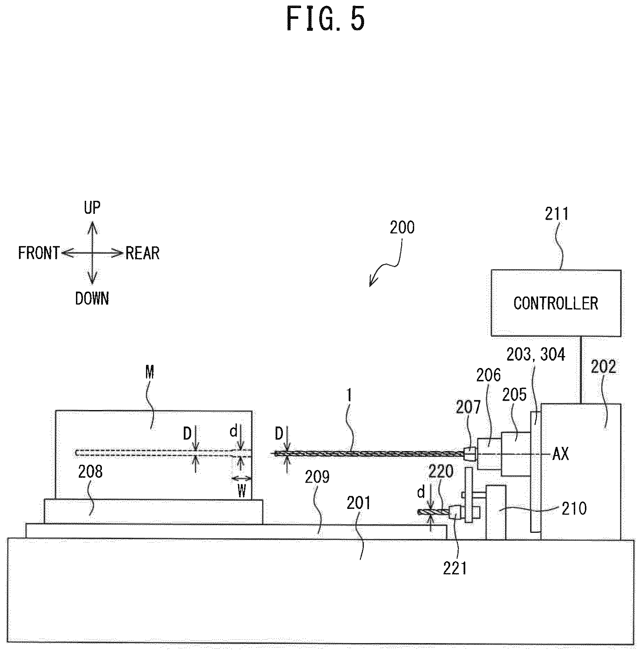

First, the double-edged drill 1 will be explained. As shown in Fig. 1, the drill 1 is formed of a hard material, such as a hard sintered alloy, high speed tool steel (high speed steel), or the like. The drill 1 is provided with a shank 2, and a body 3 that extends from the shank 2 along a shaft center AX. The shank 2 is a member that holds the drill 1 in a main shaft 206 (refer to Fig. 5) of a machine tool 200, and the shank 2 side with respect to the body 3 is a rear end side of the drill 1. Two discharge grooves 4 for discharging chips are formed in a helical shape on an outer peripheral surface 31 of the body 3. The drill 1 is a twist drill formed such that a helix angle θ of each of the discharge grooves 4 is in a range from 15 degrees or more to 35 degrees or less. Note that the rigidity of the body 3 increases, but a chip discharge performance deteriorates, as the helix angle θ becomes smaller.

The discharge grooves 4 open at a leading end portion of the body 3, and two cutting edges 5 are formed on opening sections of the discharge grooves 4. The drill 1 has a length such that a groove length L is equal to or greater than 10 times an outer diameter D (equal to or greater than 10D), and is also applied to a so-called long drill that has a length equal to or greater than 30D, for example. The drill 1 cuts a work material (workpiece), using the cutting edges 5, by rotating around the shaft center AX, and forms a deep hole while discharging chips through the discharge grooves 4. At a time of machining, a rotation direction T of the drill 1 is a counterclockwise direction as seen in a front view. Specifically, the machine tool 200 (refer to Fig. 5), on the main shaft 206 of which the drill 1 is held, cuts the workpiece by rotating the main shaft 206 to the right.

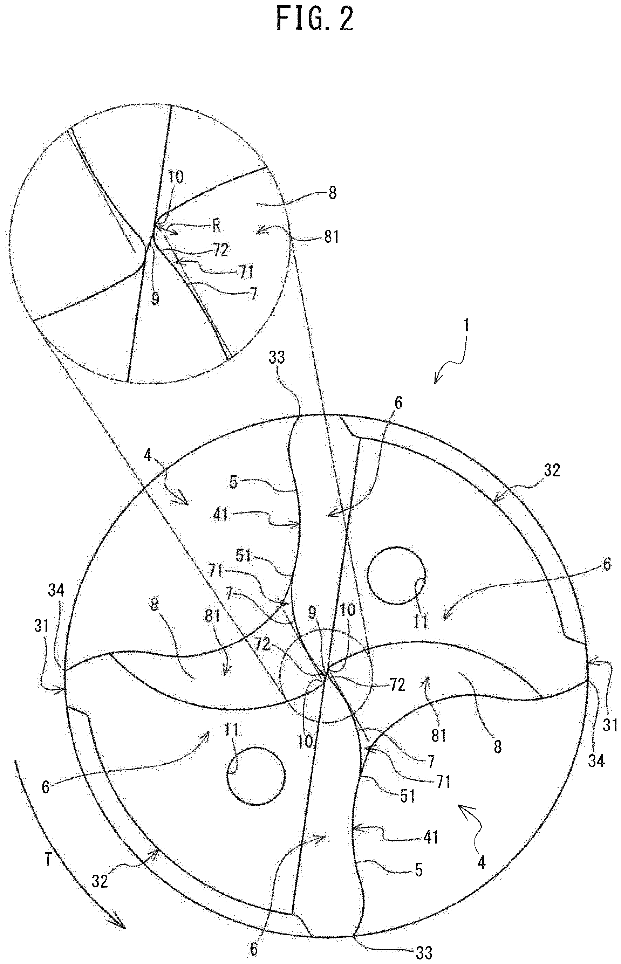

As shown in Fig. 1 and Fig. 2, the cutting edges 5 are formed on ridge sections between inner faces 41 of the discharge grooves 4 that are oriented toward the rotation direction T side, and flanks 6 of the leading end portion of the drill 1. The cutting edges 5 form a substantially S shape in a front view. Of each of the inner faces 41 of the discharge grooves 4, the inner face 41 in the vicinity of the cutting edge 5 is a so-called rake face that scoops up the chips cut by the cutting edge 5 and causes the chips to flow to the discharge groove 4. A section at which, of the inner face 41 of the discharge groove 4, the inner face 41 on the side of the cutting edge 5 intersects with the outer peripheral surface 31 of the body 3 is a leading edge 33. A section at which the inner face 41 on the opposite side to the cutting edge 5 intersects with the outer peripheral surface 31 is a heel 34. Body clearances 32 of a smaller diameter than the outer diameter D of the drill 1 are formed on the outer peripheral surface 31 over intermediate sections between the leading edges 33 and the heels 34. By providing the body clearances 32, the drill 1 reduces wear resistance caused by contact between an inner surface of the deep hole and the outer peripheral surface 31 of the body 3 at the time of forming the deep hole, and heat generation and machining torque can thus be suppressed.

The drill 1 has two lubrication holes 11 that extend in a helical shape inside the body 3 along the discharge grooves 4. The two lubrication holes 11 penetrate through the inside of the drill 1 from the rear end of the shank 2 to the leading end of the drill 1, and open, respectively, at the flanks 6. At the time of machining, a cutting oil supplied inside the lubrication holes 11 reduces the cutting resistance, and suppresses the heat generation and the machining torque. Further, the chips flow into the discharge grooves 4 along with the cutting oil and are smoothly discharged.

Thinning processing is performed on the leading end portion of the drill 1, in order to thin a web thickness in the vicinity of a chisel 9. The thinning processing is processing to form each of thinning edges 7 by shaving, while rotating a grinding stone, for example, an opening section of the discharge groove 4 from an inner end 51, which is an end portion on the inside of the shaft center AX side of the cutting edge 5, to the side of the chisel 9. The thinning edges 7 are formed while causing the grinding stone and the drill 1 to move relatively to each other, and each extends in a circular arc shape in a front view from the inner end 51 of the cutting edge 5 toward the chisel 9. As a result of forming the thinning edges 7, thinning faces 71 are formed on the leading end portion of the drill 1, which are rake faces oriented toward the rotation direction T side of the thinning edges 7.

In the thinning processing, after each of the thinning edges 7 is formed, the grinding stone performs further shaving by being caused to move relatively to the drill 1 toward the heel 34 side, and a gash portion 8 that is connected to each of the discharge grooves 4 is formed. A ridge at which a gash face 81 that is an inner face of the gash portion 8 intersects the flank 6 of the leading end portion of the drill 1, extends in a circular arc shape from an inner end 72 that is an end portion on the inside of the shaft center AX of the thinning edge 7, and is connected to the discharge groove 4 further to an inner side than the outer peripheral surface 31 in a radial direction. In other words, the gash face 81 is formed as a curved surface that is recessed inward. Thus, the gash portions 8 can secure a larger capacity of chip pockets that store the chips cut by the thinning edges 7, and can feed the chips smoothly to the discharge grooves 4 without clogging.

At the time of machining, the chips that are generated by each of the thinning edges 7 that extend in the vicinity of the chisel 9 biting into the workpiece are scooped up by the thinning faces 71 and pushed out to the gash portions 8. The chips are caused to curl by the gash faces 81 that form the curved surfaces, are cut by the leading edges 33, and are fed out to the discharge grooves 4. At this time, if the chips enter a space between the outer peripheral surface 31 of the drill 1 and the inner surface of the deep hole, the chips are not cut by the leading edges 33 and sometimes become too long. In the drill 1, since the end portion on the outer peripheral side of each of the gash portions 8 does not reach the outer peripheral surface 31 of the drill 1, the chips do not easily flow to the outer peripheral surface 31 side, and do not easily reach the space between the outer peripheral surface 31 and the inner surface of the deep hole. Thus, the drill 1 cuts the chips to be relatively small and causes the chips to form small curls, and can discharge the chips smoothly from the discharge grooves 4 and reduce the cutting resistance. The drill 1 can therefore be prevented from breaking when forming the deep hole.

Circular arc grooves 10 are formed in sections that connect each of the gash faces 81 and the thinning faces 71. Each of the circular arc grooves 10 extends in a straight line from the vicinity of the chisel 9 toward the discharge groove 4 and a cross section in an extending direction thereof forms a circular arc shape. The circular arc grooves 10 cause the chips cut by the thinning edges 7 and scooped up by the thinning faces 71 to flow smoothly to the discharge grooves 4. The drill 1 is provided with the circular arc grooves 10 between the gash faces 81 and the thinning faces 71, and can thus smoothly push the chips out from the thinning faces 71 to the gash portions 8. Note that, each of the circular arc grooves 10 is formed such that a radius of curvature R of the cross section thereof is within a range from 0.01D or greater to 0.03D or less. When the radius of curvature R is less than 0.01D, the chips are more likely to become caught when being pushed out from the thinning faces 71 to the gash portions 8, and there is a concern that the discharge performance of the chips from the gash portions 8 to the discharge grooves 4 may deteriorate. On the other hand, when the radius of curvature R is greater than 0.03D, with respect to the chip pockets formed by the circular arc grooves 10, the thinning faces 71, and the gash faces 81, in order to configure the cross section shape of the circular arc groove 10 that smoothly connects each of the thinning faces 71 and the gash faces 81, it is necessary to form the circular arc grooves 10 in a shallower position. In this case, when the diameter and the width of the chisel 9 are formed in accordance with a standard specification, the thickness of the thinning edges 7 becomes thinner, and there is a concern that unexpected breakage may occur due to stress concentration.

Next, the triple-edged drill 101 will be explained. A number of edges of the triple-edged drill 101 and the double-edged drill 1 is different, but the configuration is essentially the same, and the explanation below of the drill 101 will be simplified.

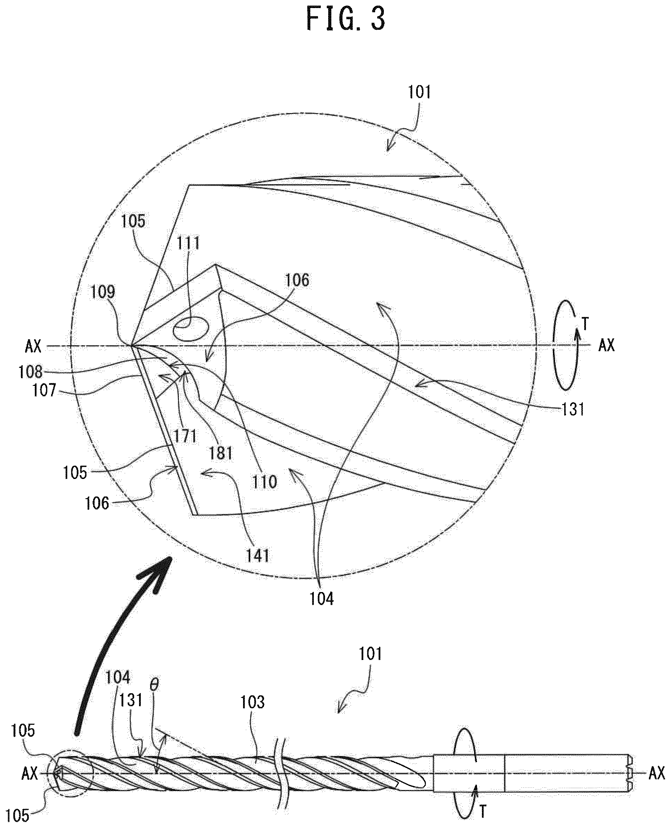

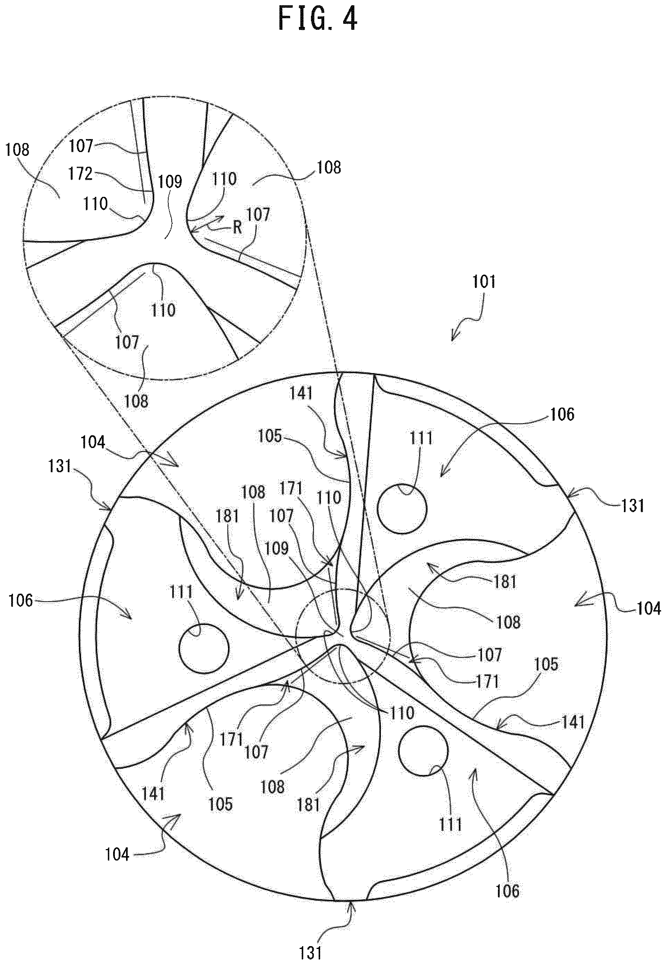

As shown in Fig. 3 and Fig. 4, the drill 101 is a drill in which three discharge grooves 104 are formed in a helical shape in an outer peripheral surface 131 of a body 103. The drill 101 is a twist drill formed such that a helix angle θ of each of the discharge grooves 104 is in a range from 15 degrees or more to 35 degrees or less. Three cutting edges 105 are formed on opening sections of the discharge grooves 104 at the leading end portion of the body 103. The cutting edges 105 are formed on ridge sections between inner faces 141 of the discharge grooves 104 that are oriented toward the rotation direction T side, and flanks 106 of the leading end portion of the drill 101. Three lubrication holes 111 that extend in a helical shape inside the body 103 along the discharge grooves 104 open, respectively, at the flanks 106. Thinning processing is performed on the leading end portion of the drill 101, and thinning edges 107 are formed. Further, of gash portions 108 that are formed by the thinning processing, ridges between each of gash faces 181 and the flanks 106 extend in a circular arc shape from a chisel 109 side, and are connected to the discharge grooves 104 further to the inner side than the outer peripheral surface 131 in the radial direction.

Circular arc grooves 110 are formed in sections that connect the gash faces 181 and thinning faces 171. A cross section of each of the circular arc grooves 110 is a circular arc shape and each extends in a straight line from the vicinity of the chisel 109 toward the discharge groove 104. Note that, similarly to the drill 1, each of the circular arc grooves 110 is formed such that the radius of curvature R of the cross section thereof is within the range from 0.01D or greater to 0.03D or less.

Next, the machine tool 200 that forms the deep hole and on which the drill 1 or the drill 101 is mounted, will be explained. Note that, for convenience, the left-right direction on paper is the front-rear direction of the machine tool 200, and the rear to front direction on the paper is the left-right direction of the machine tool 200. Further, for convenience, it is assumed that the drill 1 is mounted on the machine tool 200.

As shown in Fig. 5, the machine tool 200 is a horizontal machining center that machines the workpiece by causing a tool to relatively approach the workpiece from the side. The machine tool 200 is provided with a bed 201, a column 202, an X axis movement mechanism 203, a Y axis movement mechanism 204, a main shaft motor 205, the main shaft 206, a holder 207, a table 208, a Z axis movement mechanism 209, a tool replacement device 210, a controller 211, and the like. The bed 201 is a substantially cuboid base made of metal. The column 202 is provided in a standing manner on a rear end portion of the bed 201. The main shaft motor 205 is provided on a front surface side of the column 202, and is moved in the left-right direction and the up-down direction by the X axis movement mechanism 203 and the Y axis movement mechanism 204. The main shaft 206 extends to the front of the main shaft motor 205, and is driven by the main shaft motor 205 to rotate around an axis that extends in the front-rear direction. The holder 207 is fixed to the leading end portion of the main shaft 206. The holder 207 holds the shank 2 in a state in which the shaft center AX of the drill 1 is aligned with the front-rear direction and the leading end portion of the drill 1 is oriented toward the front. The drill 1 rotates in accordance with the driving of the main shaft motor 205.

The table 208 is provided on the bed 201, on the front side of the column 202. A workpiece M is placed on the upper surface of the table 208, and the table 208 is moved in the front-rear direction by the Z axis movement mechanism 209. The tool replacement device 210 is provided on the left side of the column 202, and replaces a holder 221 that is holding a drill 220 that forms a guide hole and that will be described later, with the holder 207 that is holding the drill 1, in accordance with instructions of the controller 211, and sets the drill 1 on the main shaft 206. The controller 211 incorporates a numerical control unit (not shown in the drawings) that is provided with a CPU, a ROM, a RAM, and a storage device, and controls operations of the X axis movement mechanism 203, the Y axis movement mechanism 204, the main shaft motor 205, and the Z axis movement mechanism 209, in accordance with an NC program. As a result, the drill 1 can move relative to the workpiece M in the front-rear direction, the left-right direction, and the up-down direction, and can rotate around the axis that extends in the front-rear direction. Further, although not shown in the drawings, the machine tool 200 is provided with a protective cover that covers the entire device, and the like.

Next, a process in which the controller 211 of the machine tool 200 uses the drill 1 to form the deep hole in the workpiece M in accordance with the NC program will be explained. The drill 1 is a long drill with a groove length L of 30D or more, for example. The machine tool 200 machines the workpiece M while holding the drill 1 in a state in which the shaft center AX of the drill 1 extends in the front-rear direction, namely, to the side. There is thus a possibility that, in the drill 1, warping of the body 3 at the time of machining may occur due to an influence of deformation of the drill 1 due to its own weight. Further, in the drill 1, warping of the body 3 may occur due to vibrations caused by the driving of the machine tool 200.

Therefore, according to the deep hole machining method of the present embodiment, the machine tool 200 forms a guide hole, using the drill 220, before forming the deep hole using the drill 1. The guide hole is formed to have a depth W of 3D or more with respect to an outer diameter D of the drill 1, and to have an inner diameter d that is D + 0.03 mm or less. When the depth W is less than 3D, there is a concern that there will be larger displacement between an opening position of the deep hole on a starting end side in the workpiece M and an opening position on a finishing end side, compared to when the depth W is 3D or more, and there is a possibility that a forming accuracy of the deep hole may decrease. Further, when the inner diameter d is larger than D + 0.03 mm, stability when the cutting edges 5 and the thinning edges 7 bite into the workpiece M deteriorates when forming the deep hole.

In addition, according to the deep hole machining method, the drill 1 that is used has the circular arc shaped gash portions 8 that connect with the discharge grooves 4 further to the inner peripheral side than the outer peripheral surface 31, and also has the circular arc grooves 10 formed between the thinning faces 71 and the gash faces 81. Further, the helix angle θ of each of the discharge grooves 4 is 25 degrees. The rigidity of the drill 1 in which the helix angle θ of each of the discharge grooves 4 is 25 degrees is higher than in a drill of the related art, and does not easily deform. Further, although the chip discharge performance deteriorates in comparison to the drill of the related art, the discharge performance is improved by having the gash portions 8 and the circular arc grooves 10 of a present application shape, and thus, the drill 1 can secure both the chip discharge performance and the rigidity.

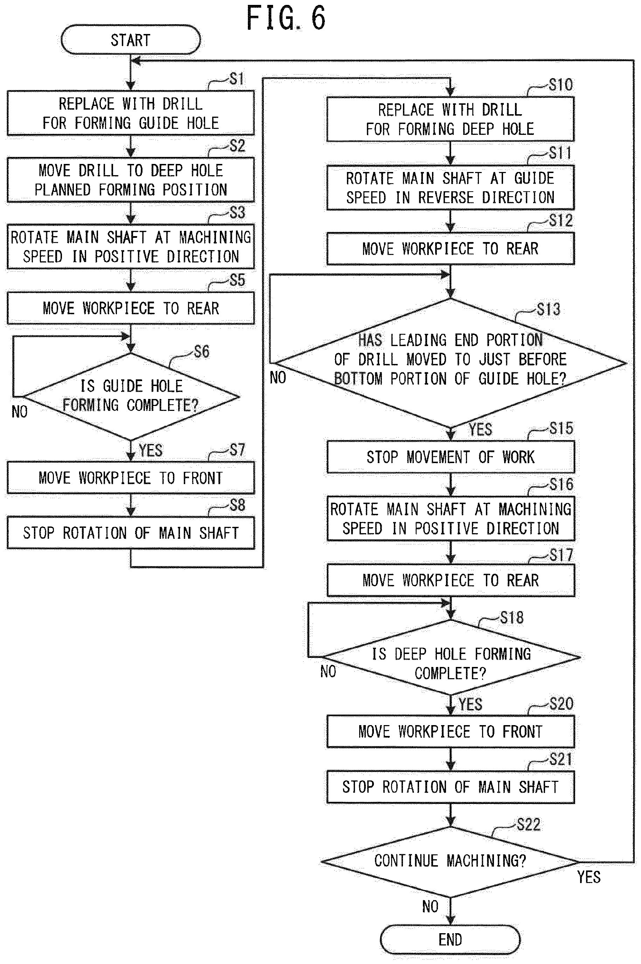

The numerical control unit of the controller 211 reads the NC program stored in the storage device into the RAM, and executes various operations. As shown in Fig. 6, the controller 211 drives the tool replacement device 210, and sets the holder 221 holding the drill 220 on the main shaft 206 (S1). An outer diameter of the drill 220 is d, is larger than the outer diameter D of the drill 1, and is D + 0.03 mm or less. The controller 211 controls the driving of the X axis movement mechanism 203 and the Y axis movement mechanism 204, and moves the leading end portion of the drill 220 to the rear of a planned forming position of the deep hole in the workpiece M (S2).

### [Guide hole forming process]

The controller 211 controls the driving of the main shaft motor 205, and causes the main shaft 206 holding the drill 220 to rotate in a positive direction (to rotate in the rotation direction T) at a rotation speed at the time of machining (S3). The controller 211 controls the driving of the Z axis movement mechanism 209, and moves the table 208 on which the workpiece M is placed to the rear (S5). The leading end portion of the drill 220 comes into contract with a rear surface of the workpiece M, cuts into the workpiece M, and starts forming the guide hole. The depth W of the guide hole is set to be 3D, for example. The controller 211 continues to move the table 208 and the workpiece M until the position of the table 208 has moved further to the rear by a distance equivalent to the depth W from a contact position between the workpiece M and the drill 220 (no at S6).

When the depth W of the guide hole reaches 3D and the forming of the guide hole is complete (yes at S6), the controller 211 moves the table 208 to the front (S7). The workpiece M in which the guide hole is formed moves to the front, and the drill 220 is removed from the guide hole. The controller 211 stops the driving of the main shaft motor 205, and stops the rotation of the main shaft 206 (S8).

The controller 211 drives the tool replacement device 210, and sets the holder 207 holding the drill 1 on the main shaft 206 (S10). The controller 211 controls the driving of the main shaft motor 205, and causes the main shaft 206 holding the drill 1 to rotate in a reverse direction (to rotate in an opposite direction to the rotation direction T) at a guide speed that is slower than the rotation speed at the time of machining (S11). As described above, the drill 1 is the long drill with the groove length L of 30D or more, for example. Thus, by the drill 1 being held on the machine tool 200 such that the shaft center AX is horizontally oriented, the drill 1 easily deforms due to its own weight. At S11, by rotating the drill 1 at the guide speed that is a slower speed than that at the time of machining, centrifugal whirling of the drill 1 can be suppressed.

### [Insertion process]

The controller 211 controls the driving of the Z axis movement mechanism 209, and moves the table 208 on which the workpiece M is placed to the rear (S12). The leading end portion of the drill 1 is inserted into the guide hole formed in the workpiece M. The leading end portion of the drill 1 whose centrifugal whirling has been suppressed is easily inserted into the guide hole. By inserting the leading end portion of the drill 1 into the guide hole, the drill 1 rotates in a state in which both ends thereof are supported by the guide hole and the main shaft motor 205, and deformation is thus corrected. Further, as a result of rotating in the reverse direction, the drill 1 is inserted into the guide hole while being aligned with the guide hole from the side of the heels 34 of the drill 1 on which the cutting edges 5 are not formed. Thus, the leading end portion of the drill 1 is inhibited from coming into contact with peripheral edge sections of the guide hole, or from touching the inner wall of the guide hole, and progression of damage, or defects/breakage can be prevented. Furthermore, since the drill 1 rotates in the reverse direction, it is possible to prevent tool edges from biting into the workpiece M when the cutting edges 5 touch the peripheral edge sections or the inner wall of the guide hole, and thus, damage of the cutting edges can be suppressed.

The controller 211 continues to move the table 208 and the workpiece M to the rear, by a distance that is slightly shorter than the depth W of the guide hole, from when the leading end of the drill 1 is positioned at the opening section of the guide hole (no at S13). When the table 208 has moved by the distance slightly shorter than the depth W, and the leading end portion of the drill 1 reaches a position just before a bottom portion of the guide hole (yes at S13), the controller 211 stops the movement of the table 208 and the workpiece M (S15).

### [Deep hole forming process]

The controller 211 controls the driving of the main shaft motor 205 and causes the main shaft 206 holding the drill 1 to rotate in the positive direction (to rotate in the rotation direction T) at the rotation speed at the time of machining (S16). The controller 211 controls the driving of the Z axis movement mechanism 209, and moves the table 208 on which the workpiece M is placed to the rear (S17). The leading end portion of the drill 1 touches the bottom surface of the guide hole, the workpiece M is cut, and the forming of the deep hole is started. A predetermined depth of the deep hole is set to a depth corresponding to 90% of the length of the groove length L, for example. The controller 211 continues to move the table 208 and the workpiece M to the rear by a distance equivalent to the predetermined depth, from when the leading end of the drill 1 is positioned at the opening section of the guide hole (no at S18).

When the table 208 and the workpiece M have moved to the rear by the length equivalent to the predetermined depth, and the forming of the deep hole is complete (yes at S18), the controller 211 moves the table 208 to the front (S20). The workpiece M in which the deep hole has been formed moves to the front, and the drill 1 is removed from the deep hole. The controller 211 stops the driving of the main shaft motor 205, and stops the rotation of the main shaft 206 (S21).

When the forming of the deep hole is to be continuously performed in accordance with the NC program (yes at S22), the controller 211 returns the processing to S1. When the forming of the deep hole is to be ended (no at S22), the controller 211 ends the execution of the NC program. Note that the deep hole machining method using the drill 101 is the same as the case in which the drill 1 is used.

As described above, the drills 1 and 101 are the twist trills in which the helix angle of each of the discharge grooves 4 and 104 is 15 degrees or more and 35 degrees or less, and the chip discharge performance is higher, machining efficiency is higher, and tool life is also longer than a gun drill, for example. When forming the deep hole using this type of the drills 1 and 101, when centrifugal force acts on the deformation of the drill 1 or 101 due to its own weight, centrifugal whirling of the drill 1 or 101 sometimes occurs. In the deep hole machining method of the configuration of the present application, in the insertion process, the drills 1 and 101 rotate at the lower speed than that at the time of machining, and the centrifugal whirling of the drills 1 and 101 can be suppressed. The leading end portion of each of the drills 1 and 101 in which the centrifugal whirling has been suppressed is easily inserted into the guide hole. As a result of the leading end portion of each of the drills 1 and 101 being inserted into the guide hole, the drills 1 and 101 rotate in a state in which both ends thereof are supported by the guide hole and the main shaft motor 205, and thus, the deformation can be corrected. Further, the drills 1 and 101 rotate in the reverse direction, and thus the drills 1 and 101 are inserted into the guide hole while being aligned with the guide hole from the side of the heels 34 of the drills 1 and 101 on which the cutting edges 5 and 105 are not formed. Thus, the leading end portion of each of the drills 1 and 101 is inhibited from coming into contact with the peripheral edge sections of the guide hole, or from touching the inner wall of the guide hole, and progression of damage, or defects/breakage can be prevented. Furthermore, since the drills 1 and 101 rotate in the reverse direction in the insertion process, it is possible to prevent the tool edges from biting into the workpiece M when the cutting edges 5 and 105 thereof touch the peripheral edge sections or the inner wall of the guide hole, and thus, damage of the cutting edges 5 and 105 can be suppressed. In addition, the drills 1 and 101 have the gash portions 8 and 108 that do not reach the outer peripheral surfaces 31 and 131, and that connect with the discharge grooves 4 and 104 further to the inner peripheral side than the outer peripheral surfaces 31 and 131. As a result, the chips curl more easily and are more easily cut, and thus, the drills 1 and 101 can improve the chip discharge performance. Therefore, when forming the deep hole, the drills 1 and 101 can be prevented from breaking.

The influence of the deformation of the drills 1 or 101 due to its own weight is more likely to occur the longer the groove length L, namely, the longer the drill 1 or 101. By machining the workpiece M in accordance with the deep hole machining method of the configuration of the present application, using the drills 1 and 101 having the groove length L of 30D or greater, the effect of preventing the breakage of the drills 1 and 101 in the insertion process can be even more clearly demonstrated.

When the inner diameter d is larger than D + 0.03 mm, in the deep hole forming process, the stability when the cutting edges 5 and 105 and the thinning edges 7 and 107 bite into the workpiece M deteriorates. When the depth W is less than 3D, in comparison to a case in which the depth W is 3D or more, the displacement between the opening position on the start end side of the deep hole in the workpiece M and the opening position on the finishing end side is larger, and a forming accuracy of the deep hole decreases.

The drills 1 and 101 in which the helix angle of each of the discharge grooves 4 is 25 degrees, have higher rigidity than general drills in which the helix angle is 30 degrees, but the chip discharge performance deteriorates. In these drills 1 and 101, since the circular arc grooves 10 and 110 are provided, the chip pockets in the gash portions 8 and 108 can be widened, and the chip discharge performance can be improved. By machining the workpiece M in accordance with the deep hole machining method of the configuration of the present application using these drills 1 and 101, the effect of preventing the breakage of the drills 1 and 101 in the deep hole forming process can be even more clearly demonstrated.

Note that the present invention is not necessarily limited to each of the above-described embodiments, and various modifications are possible. The drills 1 and 101 may be a drill for which the rotation direction T at the time of machining is a clockwise direction in a front view. The drills 1 and 101 need not necessarily be provided with the circular arc grooves 10 and 110. The helix angle θ of each of the discharge grooves 4 and 104 is preferably 25 degrees, but may be within the range from 15 degrees or more to 35 degrees or less.

In order to verify the effects of forming the deep hole in the workpiece M in accordance with the deep hole machining method of the configuration of the present application, various evaluation tests were performed using samples having the same configuration as the drills 1 and 101 described above.

### Working example 1

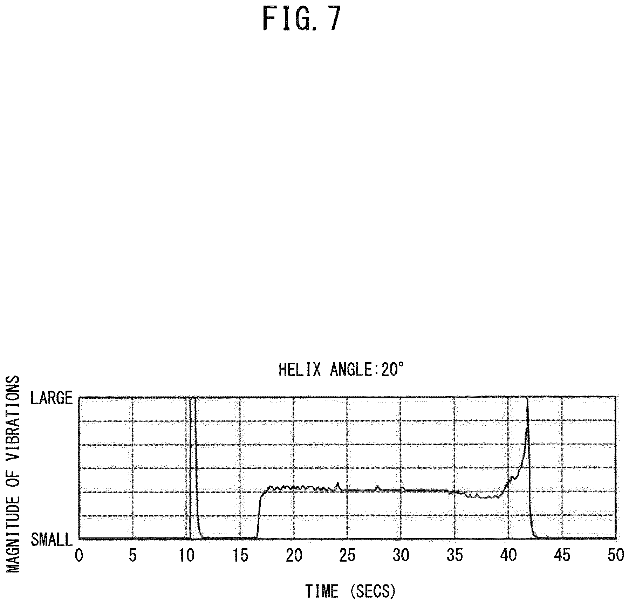

To start, a first test was performed to verify the effect of forming the discharge grooves to have the helix angle θ of 25 degrees, in a drill used to form the deep hole. In the first test, as test samples, drills of the configuration of the present application were respectively prepared, having the outer diameter D of Φ6, the groove length L of 60D, and in which the helix angle θ of 20 degrees, 25 degrees, 30 degrees, and 35 degrees was formed. Gash portions connected to discharge grooves further to the inner peripheral side than an outer peripheral surface were formed in the leading end portion of each of the drills, and each of the drills had circular arc grooves. In the first test, a magnitude of vibrations was measured when forming a through hole in the workpiece M (a material equivalent to SCM440) using each of the drills, in accordance with the deep hole machining method of the configuration of the present application. Results of the first test are shown in graphs in Fig. 7 to Fig. 10. Note that the time represented by the horizontal axes is an elapsed time from a start of machining.

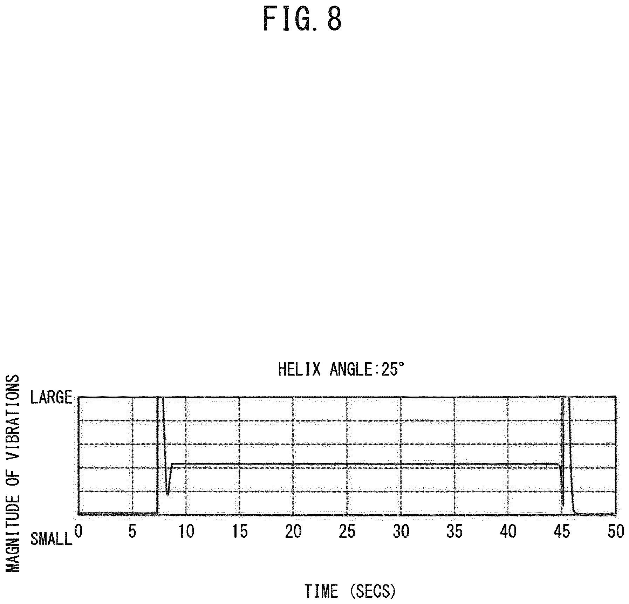

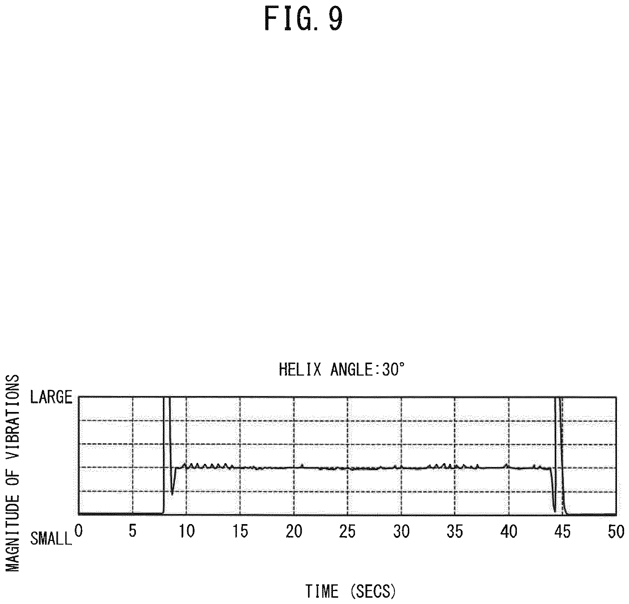

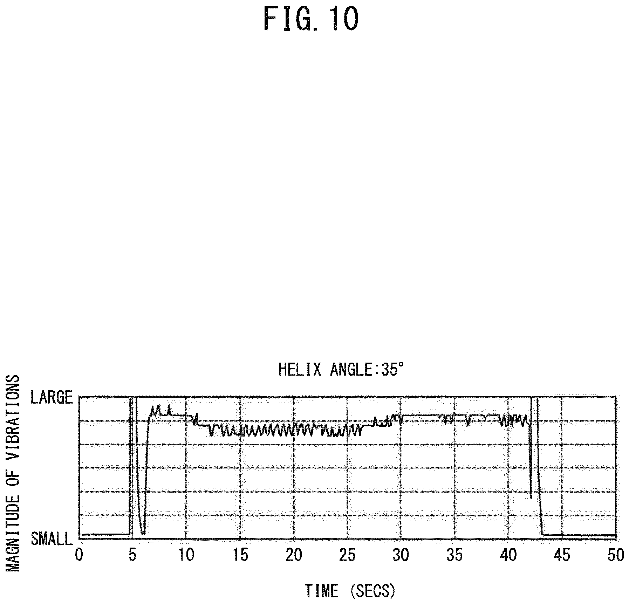

As shown in Fig. 8, with the drill having the helix angle θ of 25 degrees, the vibrations at the time of the deep hole forming (8 to 45 seconds) were maintained to be relatively small, and minute changes in the vibration status (so-called chatter) were also small. In contrast to this, as shown in Fig. 7, with the drill having the helix angle θ of 20 degrees, the vibrations at the time of the deep hole forming (18 to 40 seconds) were maintained to be relatively small, and there was little chatter up until a medium period from the start of forming the deep hole, but in a later period (35 to 40 seconds), chatter became greater. It is thought that this is because, compared to the drill with the helix angle θ of 25 degrees, although rigidity is higher, the chip discharge performance was inferior to the drill with the helix angle θ of 25 degrees, and thus, in the final stage, clogging of the chips occurred. Further, as shown in Fig. 9, with the drill having the helix angle θ of 30 degrees, the vibrations at the time of the deep hole forming (8 to 44 seconds) were maintained to be relatively small, but at the start (10 to 15 seconds), and in a later period (33 to 40 seconds), chatter was observed. This is thought to be because, in comparison to the drill having the helix angle θ of 25 degrees, the rigidity is lower. As shown in Fig. 10, with the drill having the helix angle θ of 35 degrees, a state occurred in which the vibrations at the time of the deep hole forming (7 to 42 seconds) were relatively large, and chatter also occurred. This is thought to be because, in comparison to the drill having the helix angle θ of 25 degrees, the rigidity is further lowered. According to the results of the first test, it could be verified that, by using the drill having the helix angle θ of 25 degrees that also improves rigidity compared to a general drill, by forming the gash portions in the leading end portion that are connected to the discharge grooves further to the inner peripheral side than the outer peripheral surface, and by providing the circular arc grooves, thus improving the chip discharge performance, vibrations when forming the deep hole can be suppressed, and stable machining can be performed.

### Working example 2

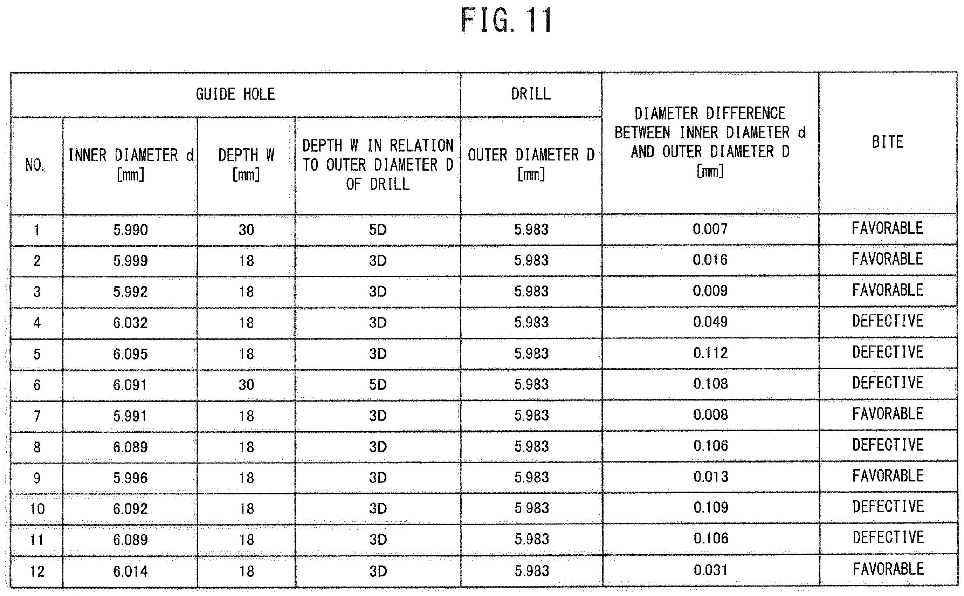

Next, a second test and a third test were performed in order to verify the effects of forming the guide hole in the guide hole forming process, as part of the deep hole machining method of the configuration of the present application. First, in the second test, in the deep hole forming process, behavior due to diameter differences between the inner diameter d of the guide hole and the outer diameter D of the drill at the time of biting were verified. In the test, a plurality of guide holes were formed in advance, having the differing inner diameters d, and deep holes were formed by inserting the drill of the configuration of the present application into the guide holes, the drill having the outer diameter D of Φ5.983 and the groove length L of 50D. Then, the machining of the deep hole was stopped when the hole had been formed to 2 mm away from the bottom portion of the guide hole, and, after the drill was removed, a biting state was observed. Results of the second test are shown in a table in Fig. 11.

As shown in Fig. 11, in the guide holes (1, 2, 3, 7, 9, and 12) for which the diameter difference between the inner diameter d of the guide hole and the outer diameter D of the drill was 0.03 mm or less, the biting when forming the deep hole was favorable. In contrast to this, in the guide holes (4, 5, 6, 8, 10, and 11) for which the diameter difference between the inner diameter d of the guide hole and the outer diameter D of the drill was 0.049 mm or more, defects such as shaft wobble and the like occurred with respect to the biting when forming the deep hole. According to the results of the second test, it could be verified that the biting of the drill when forming the deep hole was favorable when the diameter difference between the inner diameter d of the guide hole and the outer diameter D of the drill was 0.03 mm or less.

### Working example 3

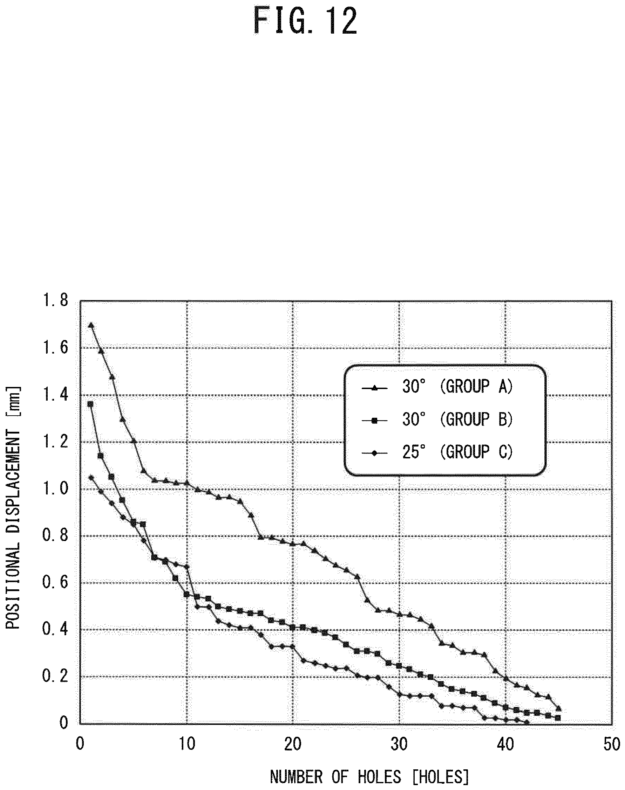

Next, in the third test, when a through hole was formed by the deep hole machining method of the configuration of the present application using the drill of the configuration of the present application having the outer diameter D of 5.983 mm and the groove length L of 50D, a displacement between opening positions in a top surface and a rear surface of a work material was measured. Note that, in the third test, 45 deep holes of a length of 300 mm were formed, respectively, in three groups A to C having different conditions. In group A, 45 through holes were formed using the drill in which the helix angle θ of 30 degrees was formed, after forming guide holes with an inner diameter of 6.03 mm and the depth W of 3D. The diameter difference between the inner diameter d and the outer diameter D of the drill was 0.047 mm. In group B, 45 through holes were formed using the drill in which the helix angle θ of 30 degrees was formed, after forming guide holes with an inner diameter of 6.01 mm and the depth W of 5D. The diameter difference between the inner diameter d and the outer diameter D of the drill was 0.027 mm. In group C, 42 through holes were formed using the drill in which the helix angle θ of 25 degrees was formed, after forming guide holes with an inner diameter of 6.01 mm and the depth W of 5D. The diameter difference between the inner diameter d and the outer diameter D of the drill was 0.027 mm. Results of the third test are shown in a graph in Fig. 12. Note that the number of holes shown on the horizontal axis are arranged in descending order of a magnitude of positional displacement, showing a distribution of the positional displacement of the through holes for each of the groups A to C.

As shown in Fig. 12, a line graph showing the results of group B, showing the positional displacement of each of the through holes formed using the drill in which the helix angle θ of 30 degrees was formed, in the guide holes having the inner diameter d of 6.01 mm and the depth W of 5D is, overall, shifted below a line graph showing the results of group A, showing the positional displacement of each of the through holes formed using the same drill in the guide holes having the inner diameter d of 6.03 mm and the depth W of 3D. Further, a line graph showing the results of group C, showing the positional displacement of each of the through holes formed using the drill in which the helix angle θ of 25 degrees was formed, in the guide holes having the inner diameter d of 6.01 mm and the depth W of 5D is, overall, shifted slightly below the line graph showing the results of group B. From this, it could be verified that, by forming the guide hole for which the inner diameter d was D + 0.03 mm or less and with the depth W of 5D or more before forming the through hole (the deep hole), stability is improved when the cutting edges and the thinning edges bite into the workpiece M when forming the through hole, and thus, the positional displacement of the through hole can be reduced. Then, it could be verified that, by using the drill having the helix angle θ of 25 degrees rather than 30 degrees, the rigidity of the drill itself can be secured, and the positional displacement of the through hole could be further reduced.

Note that the positional displacement of the through holes of group A was overall larger than the positional displacement of the through holes in group B. Although not shown in the drawings, the positional displacement of the through hole when the depth W of the guide hole is less than 3D shifts above group A, since the amount of difference is even greater than between group A and group B. It can be seen that when the biting state of the drill when forming the deep hole is defective, the positional displacement of the through hole tends to become larger. In other words, if the biting state of the drill when forming the deep hole is a favorable state, the positional displacement is contained within a relatively small range. Then, according to the results of the second working example (refer to Fig. 11), even if the depth W of the guide hole is 3D, as long as the diameter difference between the inner diameter d of the guide hole and the outer diameter D of the drill is 0.03 mm or less, the biting state of the drill when forming the deep hole is favorable. Specifically, although the positional displacement of the through holes of group A is larger overall than that of group B, the positional displacement can be said to be within a permissible range. Thus, the positional displacement of the through holes can be sufficiently reduced as long as the depth W of the guide hole is 3D or more.

### Working example 4

Next, a fourth test was performed in order to verify the effect of inserting the drill into the guide hole with the reverse rotation, in the insertion process as part of the deep hole machining method of the configuration of the present application. In the fourth test, 2 samples were prepared of drills of the configuration of the present application, having the outer diameter D of Φ9 and the groove length L of 50D. For one of the drills, durability performances were compared when successively forming a plurality of blind holes of 430 mm in the work material, while being inserted with a positive rotation into guide holes having the inner diameter d of Φ9 and the depth W of 5D. For the other drill, durability performances were compared when successively forming a plurality of blind holes of 430 mm in the work material, while being inserted with a reverse rotation into guide holes of the same size. Note that the fourth test was performed under the following conditions:
Work material: Material equivalent to SCM440
Machine used: Horizontal machining center
Machining depth: 430 mm blind hole
Cutting oil: Water-soluble cutting fluid (dilution ratio 20%)

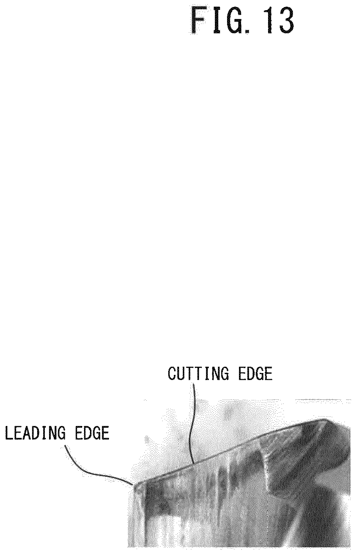

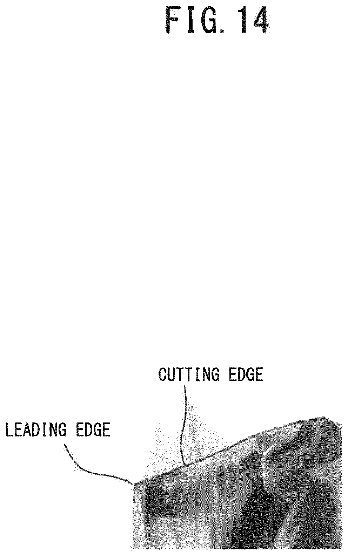

The one drill that was inserted into the guide holes with the positive rotation in the insertion process broke in the course of forming a thirtieth hole. As shown in Fig. 13, in the one drill, a leading edge was already significantly worn at a point in time of having formed 22 holes. In contrast to this, the other drill that was inserted into the guide holes with the reverse rotation in the insertion processing did not break even after forming a sixtieth hole. As shown in Fig. 14, in the other drill, even after forming the sixtieth hole, the wear of the leading edge was smaller than that of the one drill. According to the results of the fourth test, it could be verified that, by inserting the drill into the guide hole with the reverse rotation in the insertion process, the leading end portion of the drill is inhibited from coming into contact with peripheral edge sections of the guide hole or from touching the inner wall of the guide hole, and progression of damage, or defects/breakage of the drill can be prevented.

## Claims

1. A deep hole machining method for forming a deep hole in a workpiece using a machine tool on which a drill is mounted,
wherein
the drill includes:
a drill main body configured to be rotated around a shaft center;
a plurality of discharge grooves provided in a helical shape in an outer peripheral surface of the drill main body, from a leading end portion toward a base end portion of the drill main body, each having a helix angle of 15 degrees or more and 35 degrees or less;
a cutting edge formed on a ridge section between an inner face of the discharge groove that is oriented toward a rotation direction side of the drill main body, and a flank of the drill main body at the leading end portion of the drill main body;
a thinning edge provided as a result of thinning processing performed on the leading end portion of the drill main body, and extending from an inner end of the cutting edge toward a chisel portion that is the leading end portion of the drill main body;and
a gash portion provided by the thinning processing, a ridge between the gash portion and the flank extending in a circular arc shape from an inner end of the thinning edge, and the gash portion being connected to the discharge groove further to an inner peripheral side than the outer peripheral surface of the drill main body, and
machining of the workpiece by the machine tool using the drill includes:
a guide hole forming process in which another drill is used to form, in advance, a guide hole in the workpiece into which the leading end portion of the drill main body can be inserted, the guide hole having an inner diameter d that is larger than an outer diameter D of the drill main body and having a depth that is W;
an insertion process in which the leading end portion of the drill main body is inserted to a position just before a bottom portion of the guide hole, while the drill main body is rotating in a reverse direction that is opposite to a rotation direction at a time of cutting, at a lower speed than that at a time of machining; and
a deep hole forming process in which the guide hole is further cut and the deep hole is formed, while the drill main body is rotating in a positive direction that is the rotation direction at the time of cutting.

2. The deep hole machining method according to claim 1, wherein
a groove length L of the discharge groove is 30D or more.

3. The deep hole machining method according to claim 1 or 2, wherein
the inner diameter d of the guide hole is D + 0.03 mm or less, and the depth W is 3D or more.

4. The deep hole machining method according to any one of claims 1 to 3, wherein
the drill includes a circular arc groove having a circular arc shaped cross section that is provided in a section that connects a thinning face, which is a rake face of the thinning edge and which connects the thinning edge and the discharge groove, with a gash face of the gash portion, and
the helix angle of the discharge groove is 25 degrees.
